# EUROPÄISCHE PATENTSCHRIFT

(11) **EP 1 802 511 B1**
(45) Veröffentlichungstag und Bekanntmachung des Hinweises auf die Patenterteilung: **07.07.2010**
(21) Anmeldenummer: 05789128.5
(22) Anmeldetag: 06.10.2005
(51) Int. Cl.: B62D 5/00, F16H 49/00

(54) **EINRICHTUNG ZUR DREHZAHLÜBERLAGERUNG FÜR EIN LENKSYSTEM**
DEVICE FOR SUPERIMPOSING ROTATIONAL SPEEDS FOR A STEERING SYSTEM
DISPOSITIF DE SUPERPOSITION DE VITESSES POUR UN SYSTEME DE DIRECTION

(30) Priorität: 16.10.2004 CH 170404
(43) Veröffentlichungstag der Anmeldung: 04.07.2007
(73) Patentinhaber: ThyssenKrupp Presta Aktiengesellschaft, 9492 Eschen (LI)
(72) Erfinder: KENEZ, Peter, H-1089 Budapest (HU); STAUDENMANN, Christian, CH-9470 Buchs (CH); WAIBEL, Gerhard, A-6858 Bildstein (AT); ALLGÄUER, Rene, A-6844 Altach (AT)
(74) Vertreter: Wegmann, Urs
(86) Internationale Anmeldenummer: PCT/CH2005/000587
(87) Internationale Veröffentlichungsnummer: WO 2006/039825

(56) Entgegenhaltungen:
- EP-A- 1 334 897
- EP-A- 1 459 959
- WO-A-2004/000629
- WO-A-2005/054034
- WO-A-2005/054035
- US-A- 4 751 976

## Beschreibung

Die Erfindung bezieht sich auf eine Drehzahlüberlagerungseinrichtung nach dem Oberbegriff des Anspruchs 1 und Anspruchs 2.

Die Erfindung bezieht sich auf eine Einrichtung mit einem Hilfsantrieb zur Drehzahlüberlagerung für ein Fahrzeuglenksystem bei der entsprechend dem ermittelten Betriebszustand des Fahrzeuges und den vom Fahrer gewünschten Lenkeingriffen eine Überlagerung der Steuereingriffe am Steuerrad durch den Fahrer und der Drehwinkel des Hilfsantriebes auf die Lenkbewegung der Räder erfolgt. Durch die variable, einstellbare bzw. regelbare Drehzahlüberlagerung beim Lenkvorgang kann somit das Steuerverhalten des Fahrzeuges optimal den verschiedenen Fahrzuständen angepasst werden. Die Funktion einer Drehzahlüberlagerung beim Lenkvorgang ist somit gegenüber einer Krafteinkopplung, bzw. Drehmomenteinkopplung, wie sie bei einer Servolenkung zur Erleichterung des Steuervorgangs dient, entkoppelt, also ein separater unabhängiger Vorgang, welcher eine andere Funktion erfüllt.

Im Stand der Technik sind bereits verschiedene derartige Einrichtungen bekannt geworden. Neben der Anwendung von Planetengetrieben zur Überlagerung der Drehwinkel bzw. der Drehzahl werden auch Spannungswellengetriebe, die auch unter dem Begriff Harmonic-Drive-Getriebe oder Pulsatorengetriebe bekannt sind, verwendet.

In der EP 1 338 493 A1 und der JP 2 003 306 155 A werden eine Einrichtung zur Drehzahlüeberlagerung für ein Lenksystem vorgestellt, bei denen mit einem Spannungswellengetriebe die Drehzahlüeberlagerung erfolgt. Dabei ist die Einrichtung mit der vom Steuerrad angetriebenen Lenkwelle integral und drehbar ausgebildet und enthält einen Antriebsmotor, dessen Antriebsdrehzahl zwecks Erreichung der gewünschten Drehzahlüeberlagerung einstellbar ist. Bei der vorgestellten Lösung ist das Gehäuse mit der Lenkwelle verbunden und dreht somit mit. Die im Gehäuse angeordnete Motoreinheit mit Harmonic-Drive-Getriebe ist somit ebenfalls mit der Lenkwelle drehend angeordnet. Eine ähnliche Anordnung ist ausserdem in der DE 19 823 031 A1, korrespondierend mit der US 6,164,150, vorgestellt worden, wobei hier die Drehzahlüberlagerungseinrichtung mit der Problematik der Verriegelung, insbesondere im Falle des Vorwärts- und Rückwärts-Drehen am Steuerrad, beleuchtet wird.

In der Offenlegungsschrift EP 1 334 897 A1, die im Oberbegriff der Ansprüche 1 und 2 berücksichtigt ist wird eine Dreh-zahlüberlagerungseinrichtung beschrieben mit einem Elektromotorantrieb zum Antrieb der Einheit mit dem Überlagerungsgetriebe und einer integrierten elektromagnetischen Sperreinheit, welche im Falle eines Defektes die Relativrotation des Elektromotors stoppt. Hierbei ist ein Solenoid am Motorgehäuse festgelegt und es wird damit ein radial zur Rotorwelle schwenkbarer Hebel bewegt, der eine nasenförmiges Sperrelement trägt, welches beim schwenken gegen die Welle mit einer an der Welle angeordneter Kupplungsscheibe an dort angebrachten Vertiefungen einrastet und die Rotorwelle dadurch blockiert.

Eine weitere Drehzahlüberlagerungseinrichtung mit einem Elektromotorantrieb ist aus der Patentanmeldung EP 1 459 959 A2 bekannt geworden. Bei der hier vorgestellten Anordnung weist die Motorwelle und die Welle, die mit der Lenkstange verbunden ist, eine im Wesentlichen konzentrische duale Struktur auf und der Antriebsmotor ist fest installiert. Eine Sperrvorrichtung ist nicht offenbart.

Die im Stand der Technik vorgestellten Lösungen besitzen jedoch verschiedene Nachteile. Zunächst muss die Einleitung der elektrischen Energie zum Betreiben des Antriebsmotores in eine sich im Bezug zur Karosserie drehbar gelagerte Einrichtung erfolgen. Hierfür ist ein erheblicher Aufwand erforderlich.

Weiter muss eine Verriegelungseinrichtung angesteuert werden, die im Fehlerfall, beispielsweise im Falle eines Ausfalls der Stromversorgung, die Antriebswelle mit der Abtriebswelle der Einrichtung verbindet, um die Steuerung des Fahrzeuges sicher zu gewährleisten. Weiter besitzt die im Stand der Technik gezeigte Lösung den Nachteil, dass der Fahrer beim Betätigen des Steuerrades stets die gesamte Einrichtung mit dem Gehäuse zur Drehzahlüeberlagerung mit in Bewegung setzen muss. Durch die, verglichen mit Lenksystemen ohne Drehzahlüeberlagerung, größeren bewegten Massen wird die Handhabung erschwert und träger. Die Feinfühligkeit der Steuerung des Kraftfahrzeuges wird dadurch beeinträchtigt. Ein weiterer Nachteil besteht darin, dass eine grosse Anzahl Bauelemente notwendig ist zur Realisierung einer solcher Drehzahlüeberlagerung, womit höhere Genauigkeitsanforderungen an die Einzelteile, höhere Herstellkosten auftreten und die Betriebssicherheit der Anordnung verringert wird.

Die Aufgabe der vorliegenden Erfindung liegt darin, die Nachteile des vorerwähnten Standes der Technik zu beseitigen. Insbesondere besteht die Aufgabe darin, eine Einrichtung zur variablen Drehzahlüeberlagerung für ein Lenksystem bereitzustellen, bei dem die Einkopplung der Energie zum Betreiben des Antriebsmotors vereinfacht wird und somit die Wirtschaftlichkeit und Betriebssicherheit erhöht wird und dabei gleichzeitig ein verfeinertes Steuerverhalten ermöglicht wird durch Reduzierung der bewegten Massen und des Trägheitsverhalten des Systems.

Die Aufgabe wird erfindungsgemäss durch die Anordnung nach den Merkmalen der Ansprüche 1 und 2 gelöst. Die abhängigen Ansprüche definieren weitere vorteilhafte Ausführungsformen.

Die erfindungsgemässe Drehzahlüberlagerungseinrichtung für ein Fahrzeuglenksystem umfasst eine Antriebswelle mit einer Abtriebswelle, die zur Antriebswelle in deren Achsrichtung ausgerichtet ist und eine Trägeranordnung, welche die Antriebswelle und die Abtriebswelle mindestens teilweise gelagert, drehbar positioniert. Weiter ist ein Hilfsantrieb vorgesehen mit einem Rotor, der drehfest mit einem Wave-Generator, wie im einfachsten Fall eine ovale Scheibe, verbunden ist, auf dessen Umfang direkt oder indirekt ein aussenverzahnter flexibler Ring gelagert ist, wobei dessen Aussenverzahnung in ein Innenzahnrad zumindest in zwei gegenüberliegenden Umfangspunkten eingreift. Hierbei ist die Trägeranordnung karosseriefest angeordnet. Die Abtriebswelle ist mit dem Innenzahnrad drehfest verbunden und die Antriebswelle ist mit dem aussenverzahnten flexiblen Ring drehfest verbunden. Die Antriebswelle und die Abtriebswelle sind voneinander unabhängig frei drehbar gelagert.

Der Wave-Generator bildet zusammen mit dem aussenverzahnten flexiblen Ring ein sogenanntes Harmonic-Drive-Getriebe, wie es beispielsweise die Firma HARMONIC DRIVE AG, Hoehnbergstrasse 14, D-65555 Limburg a.d. Lahn in Deutschland herstellt. Bezüglich der hier verwendeten Definitionen und Ausbildungen sei speziell auf die Katalogseiten mit deren Funktionsbeschreibungen der vorerwähnten Firma verwiesen.

Selbstverständlich ist es auch möglich, die vorerwähnte erfinderische Ausbildung auch gegenüber dem Harmonic-Drive-Getriebe invers anzuordnen. Dies bedeutet, dass die Antriebswelle dann mit dem Innenzahnrad drehfest verbunden ist und die Abtriebswelle mit dem aussenverzahnten flexiblen Ring drehfest verbunden ist.

Für die erfinderische Drehzahlüberlagerungseinrichtung werden Vorteilhaft Drehzahlen im Bereich von 0 bis 1200 Winkelgrad pro Sekunde auf die Drehzahl der Antriebswelle überlagert und an die Abtriebswelle ausgegeben. In Einzelfällen ist sogar die Überlagerung einer negativen Drehzahl möglich, wenn der Fahrer das Fahrzeug unsachgemäss schnell steuert. Hier sind Einkopplungen von Drehzahlen von bis zu 1000 Winkelgrad pro Sekunde geeignete, bevorzugte Werte. Es sind jedoch auch grössere Werte möglich. Das Harmonic Drive Getriebe sollte hierbei mit Vorteil ein festes Untersetzungsverhältnis im Bereich von 15 bis 75 aufweisen. Hierbei wird eine Drehzahlbereich des Antriebsrotors im Bereich von 0 bis 6000 Umdrehungen pro Minute (Upm) resultieren welcher durch den gesteuerten Motorantrieb entsprechend varierbar vorgegeben wird zur gewünschten Drehzahlüberlagerung der Antriebswelle beim Steuervorgang.

Eine derartige Anordnung besitzt verschiedene Vorteile. Die Anordnung und die Zuordnung der Elemente des Getriebes zueinander bedingt, dass das Überlagerungsgetriebe, obgleich es zwei Antriebsdrehzahlen auf eine Abtriebsdrehzahl überlagert, nur zwei ineinander greifende korrespondierende Verzahnungen aufweist. Die Anordnung der Getriebeelemente ermöglicht ein sehr hohes Übersetzungsverhältnis zwischen der Drehzahl des Rotors des Hilfsantriebes und der Abtriebswelle. Übersetzungen im Bereich von 50:1 sind hier durchaus übliche Werte. Durch dieses hohe Übersetzungsverhältnis kann das Überlagerungsgetriebe im Falle des Ausfalls der Stromversorgung des Hilfsantriebes, der vorzugsweise ein Elektromotor ist, bereits ohne Verriegelung ein gewisses Drehmoment übertragen. Die Bremswirkung des nicht angetriebenen Elektromotors wird mit dem entsprechenden Übersetzungsverhältnis im Beispiel 50-fach erhöht. Bei üblichen Bremsmomenten von 0,1 Nm können so bereits Momente von 5 Nm vom Steuerrad auf die Antriebswelle übertragen werden. Für den Fall, dass die Lenkunterstützung in Funktion ist, sind nur selten höhere Momente zu übertragen. Insbesondere während schneller Fahrt bei der das Risiko ungleich höher ist, sind die durch die Überlagerungseinrichtung zu steuernden Momente relativ niedrig. Durch eine geringe Erhöhung der Reibung kann dieser Wert noch entsprechend erhöht werden.

In der Praxis wird dennoch mit Vorteil eine Verriegelungseinrichtung vorgesehen werden. Die Verriegelungseinrichtung kann erfindungsgemäss sehr einfach gestaltet werden. Es genügt eine einfache Verriegelung zwischen dem Rotor des Hilfsantriebes und dem Gehäuse anzuordnen. Damit braucht die Verriegelung vorteilhafterweise nicht in die Verzahnungen einzugreifen.
Dabei ist im Verhältnis nur ein geringes Verriegelungsmoment im Vergleich zu dem vom Steuerrad auf die Antriebswelle zu übertragenden Moment erforderlich. Dadurch wird es sogar möglich, die Verriegelung durch einen Reibschluss zu realisieren. Aus Sicherheitsgründen wird jedoch dem Formschluss der Vorzug gegeben. Allerdings sind die Festigkeitsanforderungen an die Verriegelungsmechanik aufgrund des geringen erforderlichen Verriegelungsmomentes gering. Aufgrund der hohen Drehzahlübersetzung zwischen Rotor und Abtriebswelle kann im Notfall eine unkontrollierte Verdrehung des Rotors für einen grossen Winkelbereich, beispielsweise bis 50°, zugelassen werden, bis die Verriegelung einrastet. Der Lenkwinkel würde dann beispielsweise nur um etwa 1° verfälscht werden. Das hat zur Folge, dass die Verriegelung mittels Formschluss durch Eingreifen eines Stiftes in eine Bohrung einfach und sicher gestaltet werden kann. Durch den grundsätzlich ungefährliche grossen Verstellwinkel des Rotors gegenüber dem Gehäuse können relativ wenige und grosse Vertiefungen am Umfang des Rotors vorgesehen sein, was zu konstruktiv einfachen vestaltungsmöglichkeiten führt.

Es ist vorteilhaft, die Trägeranordnung als mindestens teilweise geschlossenes Gehäuse auszubilden. Die karosseriefeste Anordnung der Trägeranordnung bzw. des Gehäuses gestattet eine sehr einfache und ausfallsichere elektrische Anbindung des Systems an die Fahrzeugelektronik. Auch kann eine eventuell erforderliche Verriegelungseinrichtung einfach angeordnet und angesteuert werden. So ist beispielsweise eine hydraulische oder elektrohydraulische Ansteuerung alternativ zur bevorzugten elektrischen Ansteuerung möglich. Bei der vorliegenden erfindungsgemässen Anordnung bewirkt der Hilfsantrieb lediglich im wesentlichen die erwünschte varierbare Drehwinkel- bzw. Drehzahlüeberlagerung zwischen der Antriebs- und der Abtriebswelle einer Lenkanordnung. Eine zusätzliche Einkopplung einer Lenkkraft, wie dies bei einer Servolenkanordnung realisiert wird, findet bei der vorliegenden erfinderischen Anordnung nicht statt.
Es ist allerdings vorteilhaft, eine Lenkkraftverstärkung mit der erfinderischen Drehzahlüberlagerungseinrichtung zu kombinieren. Für diesen Fall wird vorteilhafterweise abtriebswellenseitig zusätzlich eine Lenkkrafthilfeanordnüng vorgesehen.

Bei der erfindungsgemässen Drehzahlüberlagerungseinrichtung wird somit die gesamte Steuerkraft bzw. das gesamte Moment an der Antriebswelle bzw. am Steuerrad gegen gehalten bzw. abgestützt. Allenfalls wird dieses wie vorerwähnt durch eine zusätzliche Lenkkrafthilfeanordnung verringert. Die erfinderische Anordnung besitzt aber den wesentlichen Vorteil, dass, obwohl keine zusätzliche Lenkkraft durch den Hilfsantrieb in das System eingekoppelt wird , die Reibungsverluste in der Vorrichtung selbst, insbesondere die im Harmonic - Drive - Getriebe , vom Hilfsantrieb ausgeglichen werden, so dass der Fahrer ausschliesslich , oder zumindest fast ausschliesslich, das Moment für Lenkwirkung und nicht, oder zumindest nur in sehr geringem Ausmass - weniger als 10% der Verluste -, für die Getriebeverluste in der Drehzahlüberlagerungsvorrichtung aufwenden muss.

Die vorliegende Erfindung ist konstruktiv besonders einfach und mit wenig Teilen aufgebaut und ermöglicht somit eine betriebssichere und wirtschaftliche Anordnung zu realisieren. Ausserdem wird ein besonders feinfühliges Lenkverhalten ermöglicht, ohne dass der Fahrer direkt den Einsatz der Drehzahlüberlagerungseinrichtung verspürt, wie beispielsweisedurch ruckartige oder rippelartige Gegenkräfte am Lenkrad.

Die Erfindung wird nun nachfolgend beispielsweise und mit schematischen Figuren näher erläutert. Es zeigen:
- Fig. 1: schematisch eine Übersichtsdarstellung eines Fahr- zeuglenksystems mit eingebundener Drehzahlüberla- gerungseinrichtung
- Fig. 2: schematisch und im Schnitt eine erfindungsgemässe Drehzahlüberlagerungseinrichtung
- Fig. 3: schematisch und im Querschnitt eine Drehzahlüber- lagerungseinrichtung gemäss Fig. 2
- Fig. 4: schematisch und im Schnitt eine weitere erfin- dungsgemässe Ausbildungsform einer Drehzahlüberla- gerungseinrichtung
- Fig. 5: schematisch und im Schnitt eine vergrösserte Dar- stellung der erfindungsgemässen Drehzahlüberlage- rungseinrichtung im Bereich des Harmonic-Drive- Getriebes.
- Fig. 6: eine Ausführungsform der Drehzahlüberlagerungsein- richtung mit einstellbarere Sicherheitskupplung in perspektivischer Darstellung.
- Fig. 7: eine Drehzahlüberlagerungseinrichtung nach den Fi- guren 2 bis 5 kombiniert mit einer einstellbaren Sicherheitskupplung im Längsschnitt.
- Fig. 8: schematisch einen anderen Aufbau der Sicherheits- kupplung.
- Fig. 9: und Fig. 10 zeigen zwei Ausführungsformen für die Kontaktscheibe.
- Fig. 11: eine Detailansicht durch die Verriegelungseinrich- tung entsprechend dem Ausschnitt Z aus der Figur 7.

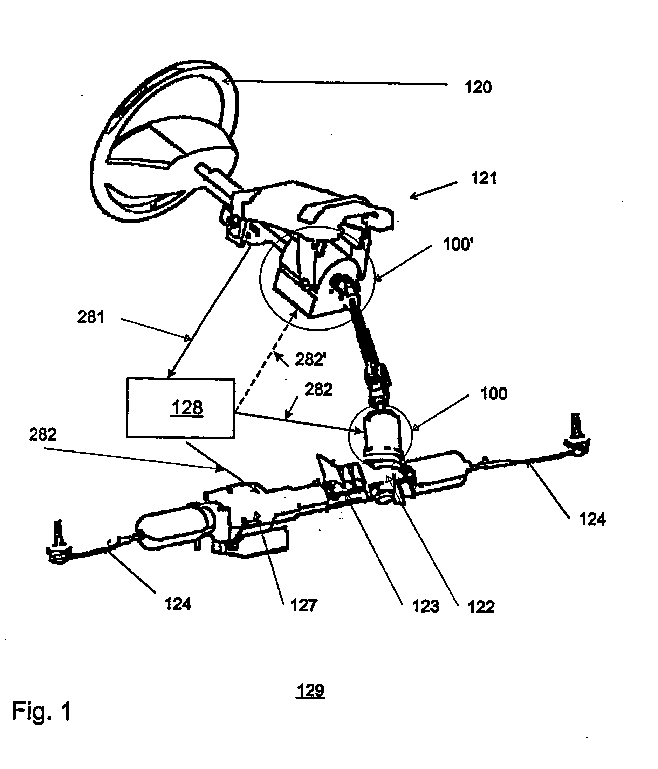

In Fig. 1 ist ein schematischer Aufbau einer Lenkvorrichtung 129 mit Hilfskraftunterstützung dargestellt, welcher im wesentlichen dem Stand der Technik entspricht. Sie besteht unter anderem aus einem Steuerrad 120, einer Lenksäule 121, dem Lenkgetriebe 122 und den beiden Spurstangen 124. Die Spurstangen 124 werden durch die Zahnstange 123 angetrieben. Zur Hilfskraftunterstützung dient die aus hier nicht näher zu bezeichnenden Komponenten gebildete Lenkkraftunterstützung 127. Die Erfindung bezieht sich auf die Überlagerungseinrichtung 100 zur Drehzahlüberlagerung in der Anordnung in einer Lenkvorrichtung für ein Kraftfahrzeug. Dabei wird der Fahrerwunsch durch das Steuerrad 120 über eine nicht gezeigte Sensorik als Signal 281 in ein Steuergerät 128 eingespeist. Im Steuergerät werden daraus und aus weiteren hier nicht näher bezeichneten Daten die entsprechende Steuerspannung 283 für den Elektromotor der Lenkkraftunterstützung 127 und die Steuerspannung 282 des Antriebs für die Drehzahlüberlagerungseinrichtung 100 bestimmt und an die Lenkkraftunterstützung 127 bzw. Drehzahlüberlagerungseinrichtung 100 ausgegeben. Dabei ist eine feinfühlige und schnelle Regelung erforderlich, welches eine steife und wenig Trägheit und Eigenschwingung verursachendes Lenksystem ermöglicht. Es ist dabei möglich, die Drehzahlüberlagerungsvorrichtung 100 an verschiedenen Stellen im Lenksystem anzuordnen. In der Figur 1 ist als Beispiel eine mögliche alternative Anordnung der Drehzahlüberlagerungsvorrichtung 100' mit der alternativen zugehörigen Steuerspannung 282' angedeutet. Es sind natürlich auch andere Stellen im Lenksystem möglich.

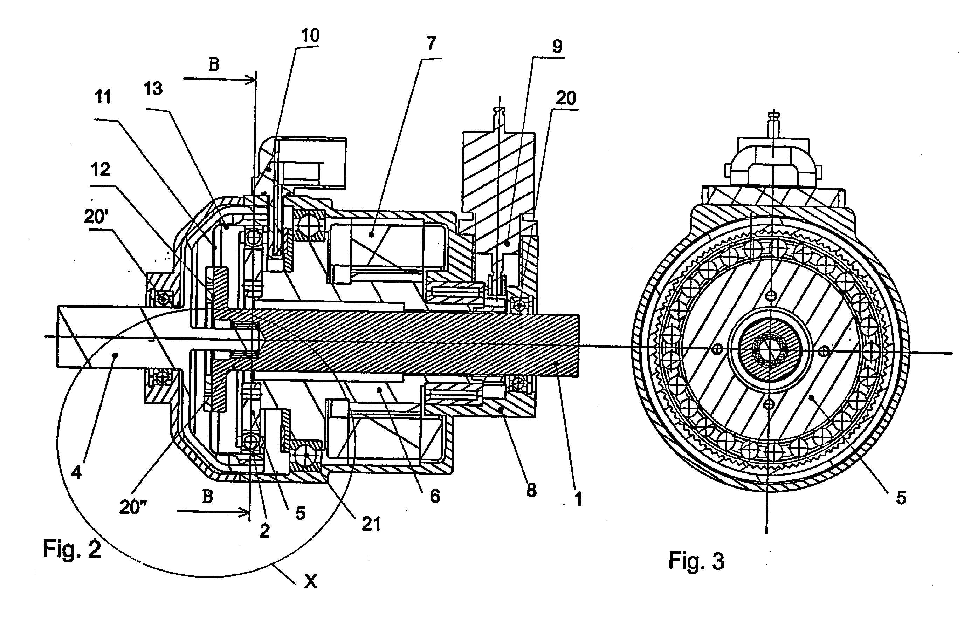

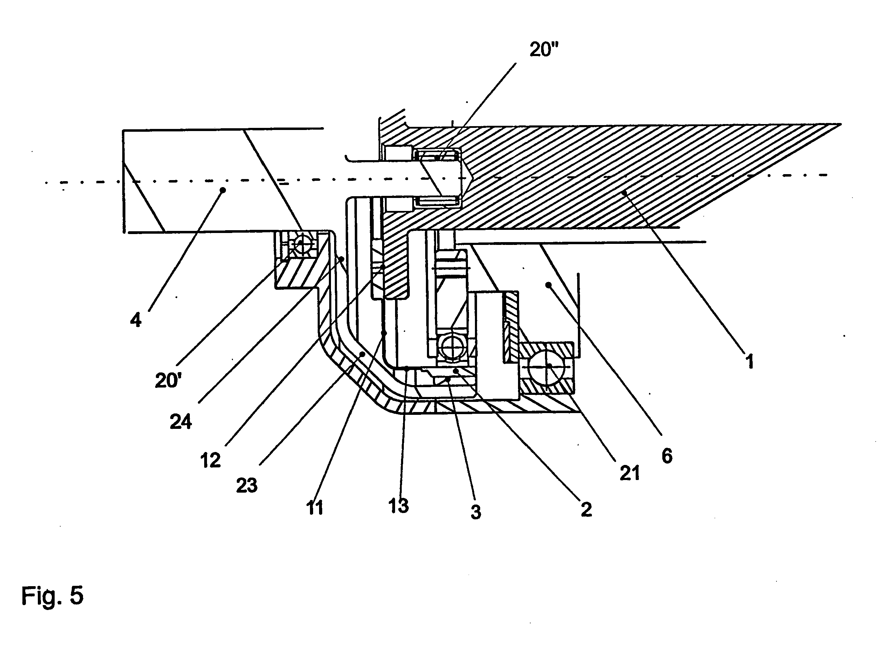

In Fig. 2 ist eine erfindungsgemässe Drehzahlüberlagerungseinrichtung Längsschnitt dargestellt. Eine Antriebswelle 1 und Abtriebswelle 4 sind in Achsrichtung gegeneinander ausgerichtet und drehbar unabhängig voneinander drehbeweglich gelagert. Die Antriebswelle 1 ist in einem Lenksystem mit einem Lenkrad 120 wirkverbunden. Die Trägeranordnung 8 nimmt die Lager 20, 20' und 20" auf für die drehbar Lagerung der Antriebswelle 1 und der Abtriebswelle 4. Diese Wellen 1, 4 können vollständig an der Trägeranordnung gelagert werden oder aber auch zusätzliche ausserhalb der Trägeranordnung 8. Die Trägeranordnung 8 ist chassis-fest am Fahrzeug angeordnet und dreht mit keiner der beiden Wellen 1,4 mit. Die Trägeranordnung 8 ist vorteilhafterweise als ein im wesentlichen geschlossenes Gehäuse 8 ausgebildet. Koaxial um die Antriebswelle 1 ist, gegenüber dem Gehäuse 8, ein Rotor 6 drehbar mit einem Lager 21 gelagert angeordnet, welcher durch den stationär angeordneten umfassenden Stator 7 getrieben wird und zusammen einen Elektromotor bildet. Bevorzugterweise ist dieser Motor als elektronisch kommutierter Motor ausgebildet. Dieser Hilfsantrieb 6, 7 kann aber auch anderer Art sein, wie beispielsweise ein hydraulischer Motor. Am Rotor 6 ist ein Wave-Generator 5 angeordnet, der beispielsweise aus einer ovalen Scheibe besteht, auf dessen Umfang direkt oder indirekt ein aussenverzahnter flexibler Ring 2 gelagert ist und der ein erstes Getriebeelement bildet. Diese Aussenverzahnung greift zum mindesten an zwei gegenüberliegenden Umfangspunkten in ein Innenzahnrad 3 ein. Dieses Innenzahnrad 3 ist mit der Abtriebswelle 4 drehfest verbunden, wobei die Antriebswelle 1 mit dem aussenverzahnten flexiblen Ring 2 drehfest verbunden ist. In Fig. 5 ist diese Getriebeanordnung in vergrösserter Darstellung verdeutlicht dargestellt. Die vorliegende Ausbildung der Drehzahlüberlagerungseinrichtung bewirkt, dass wenn der Hilfsantrieb 6, 7 nicht betrieben wird, keine Drehzahlüberlagerung auf die Abtriebswelle 4 statt findet und die Antriebswelle 1 mit der Abtriebswelle 4 über die Getriebeanordnung 1:1 gekoppelt ist. In diesem Fall überträgt sich somit die Drehbewegung des Lenkrades 120 bzw. der Antriebswelle 1 direkt, ohne Drehzahlveränderung auf die Abtriebswelle 4 und somit auf das Lenkgetriebe 122. Wird der Hilfsantrieb 6, 7 in Bewegung gesetzt, entsprechend den Signalen der Ansteuerungselektronik des Steuergerätes 128, wird der Rotor 6 in Bewegung versetzt und dessen Drehzahl, entsprechend untersetzt, über das eingangs beschriebene Harmonic-Drive-Getriebe auf die Abtriebswelle 4 überlagert. Das Drehzahlverhalten der Lenkeinrichtung kann somit über die vorliegende Drehzahlüberlagerungseinrichtung wunschgemäss der Fahrsituation und den Fahrbedürfnissen mit Hilfe der Steuerungsvorrichtung 128 eingestellt und nachgeführt werden.

In einer vorteilhaften Weiterbildung ist der flexible Ring 2 topfförmig ausgebildet und direkt mit seiner Bodenfläche 11 mit der Antriebswelle 1 bzw. in einer alternativen Ausführungsform mit der Abtriebswelle 4 drehfest verbunden, bevorzugt sogar durch eine einfache Verstemmung 12 oder Nietverbindung 12 oder durch eine Schweissverbindung 12 des so gebildeten Bodens mit der Antriebswelle 1 bzw. in einer alternativen Ausführungsform mit der Abtriebswelle 4, wie dies auch im Detail aus der Querschnittsdarstellung der Fig. 3 ersichtlich ist.

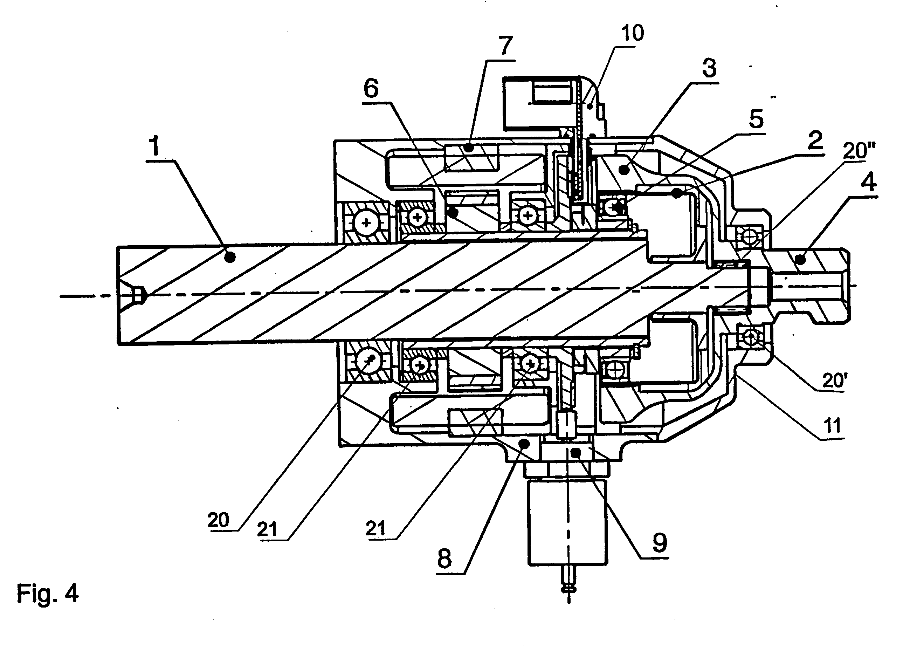

In einer alternativen Ausführungsform ist es auch möglich, die Antriebs- und die Abtriebswelle in der Anordnung gegeneinander auszutauschen. Hierbei wird dann die Antriebswelle 1 mit dem Innenzahnrad 3 drehfest verbunden und die Abtriebswelle 4 mit dem aussenverzahnten flexiblen Ring 2 drehfest verbunden. Eine weitere Ausbildung der erfindungsgemässen Anordnung mit unterschiedlicher Positionierung der funktionalen Elemente ist in Fig. 4 dargestellt. Die grundlegende Funktion der vorliegenden Erfindung bleibt jedoch dieselbe.

Das Innenzahnrad 3, dessen Zahnkreis bevorzugt kreisrund ist, kann einteilig mit der Abtriebswelle 4 oder als separates Bauteil ausgebildet sein, das mit der Abtriebswelle 4 durch umformtechnisches Fügen, analog dem Durchsetzfügen, oder durch Schweissen oder Löten mit der Abtriebswelle oder durch eine Reibschlüssige Verbindung verbunden werden. In besonders vorteilhafter Weise ist das Innenzahnrad, topfförmig ausgebildet. Ein derartiges Innenzahnrad ist dann beispielsweise durch eine Blechumformung und Stanzoperationen hergestellt und an seinem Topfboden 24 mit der Abtriebswelle drehfest verbunden.

Zur Erfassung des Drehwinkelzustandes der Anordnung ist vorteilhafterweise ein Drehwinkelsensor 10 vorgesehen, welcher mit einem Steuergerät 128 verbunden ist, welches wiederum auf den Hilfsantrieb 6, 7 einwirkt zur Einstellung des gewünschten Drehzahlüberlagerungsverhaltens der Lenkeinrichtung. Der Sensor 10 kann hierbei Positionen des Rotors 6, der Antriebswelle 1 oder der Abtriebswelle 4 erfassen. Je nach gewähltem Steuerungsalgorithmus kann hierbei eines der Signale oder auch die Kombination der Signale verarbeitet werden.

Aus Sicherheitsgründen wird mit Vorteil eine mechanische Verriegelungseinrichtung 9 vorgesehen, welche es ermöglicht, mit Hilfe eines Stiftes den Rotor 6 im Störungsfall zu blockieren. Wie in Fig. 2 und Fig. 4 dargestellt besteht die Verriegelungsvorrichtung 9 darin, dass ein Stift im Störungsfall in eine Bohrung des Rotors 6 eingreift und diesen damit blockiert. Die Verriegelungsvorrichtung 9 ist derart ausgebildet, dass im Normalbetrieb der Stift beispielsweise elektromagnetisch zurückgezogen ist und im Störungsfall, also auch bei Stromausfall, der Stift durch Federkraft in die Blockierungsposition getrieben wird.

Wie in Fig.2 und Fig.5 dargestellt ist, ist der flexible verzahnte Ring 2 topfförmig ausgebildet und mit seiner Bodenfläche 11 mit der Antriebswelle 1 bzw. der Abtriebswelle 4 drehfest verbunden. Zur Geräuschverminderung der Getriebeanordnung kann vorteilhafterweise der Kragen 13 des Topfes des flexiblen verzahnten Ringes 2 vergrössert werden oder aber auch der Topf 11, 13 weicher ausgebildet werden. Zwischen dem Befestigungselement 12 des Topfes und der Antriebswelle 1 können zusätzlich Gummi- oder Kunststoffzwischenstücke angeordnet werden zur weiteren Dämpfung. Eine weiter Möglichkeit, die Übertragung des Körperschalls zu vermindern, besteht darin, das Gehäuse 8 mit Gummi- oder Kunststoffelementen entsprechend an der Karosserie zu befestigen. In analoger Weise kann auch der Kragen 23 des Innenzahnrades 3 flexibel ausgestaltet sein und das Innenzahnrad 3 an seinem Boden 24 mit Gummi- oder Kunststoffzwischenstücken an der Antriebswelle 4 zur Geräuschdämpfung befestigt werden.

Die erfindungsgemässe Drehzahlueberlagerungseinrichtung kann äusserst kompakt aufgebaut werden, beispielsweise mit einem Aussendurchmesser von weniger als 80 mm und einer Länge von weniger als 100 mm und dies bei äusserst hoher Zuverlässigkeit im Betrieb.

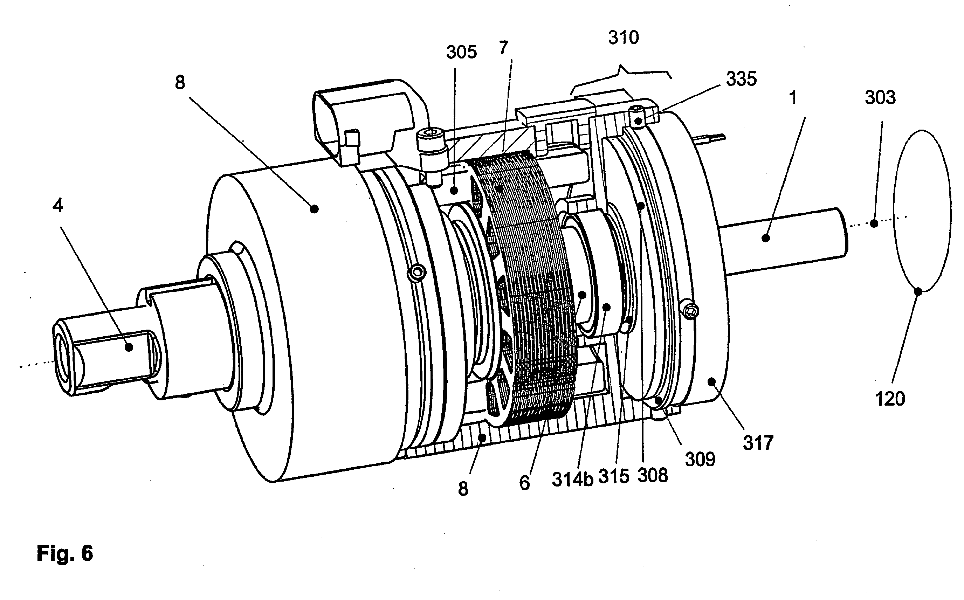

Wie bereits oben erläutert wurde , ist für verschiedene Anwendungen vorgesehen, eine Sicherheitskupplung in die Drehzahlüberlagerungseinrichtung zu integrieren. Die Aufgabe dieser Sicherheitskupplung besteht darin, im Falle einer Fehlfunktion, beispielsweise eines Sensorfehlers, eines Softwarefehlers oder von Stromausfall der Bordspannung, die entsprechend zu einem Fehler bei der Ansteuerung des Hilfsantriebes führen würden, die sichere Kupplung zwischen Antriebswelle 1 und Abtriebswelle 2 herzustellen. Neben der oben bereits vorgestellten Lösung für eine derartige Sicherheitskupplung oder auch Verriegelungseinrichtung 310 ist in den Figuren 6 bis 11 eine weitere Ausführungsform für eine Sicherheitskupplung mit verschiedenen Varianten dargestellt. Aus dieser Weiterführung der Erfindung ergeben sich zusätzliche Vorteile.

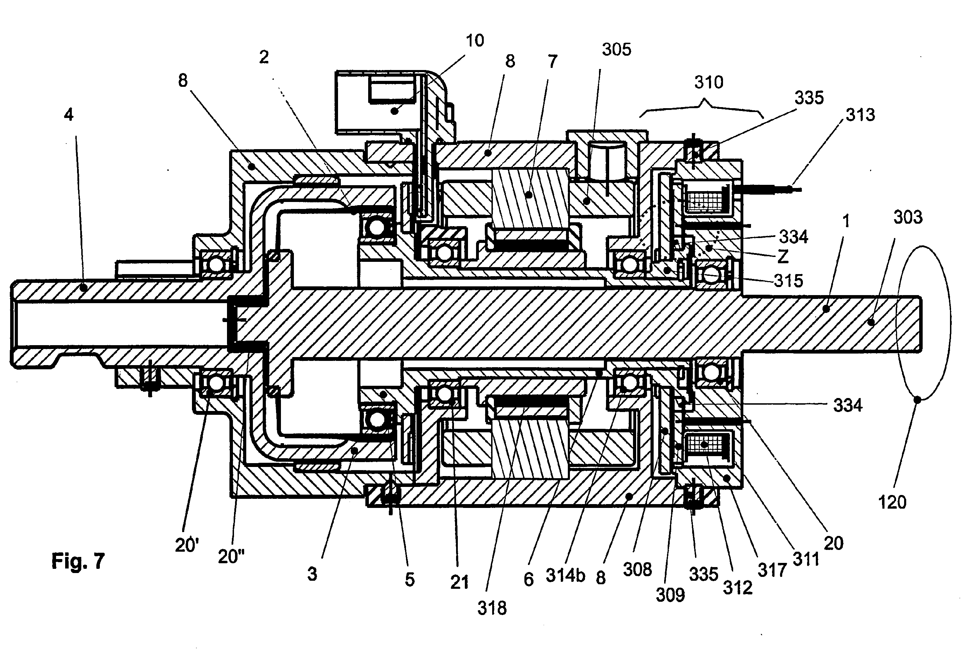

In Figur 6 ist schematisch und in dreidimensionaler Ansicht eine erfindungsgemässe Drehzahlüberlagerungseinrichtung dargestellt, wie bereits beschrieben in den vorhergehenden Figuren 2 bis 5, kombiniert mit einer bevorzugten, einstellbaren Verriegelungseinrichtung bzw. Sicherheitskupplungsanordnung 310, wobei in Figur 7 die Vorrichtung im Querschnitt und mehr detailliert dargestellt ist. In einer Weiterführung der Erfindung ist für die Drehzahlüberlagerungseinrichtung für ein Fahrzeuglenksystem mit einer Abtriebswelle 4, die zur Antriebswelle 1 in deren Achsrichtung 303 ausgerichtet ist, einer Trägeranordnung 8 welche die Abtriebswelle 4 und die Antriebswelle 1 mindestens teilweise gelagert drehbar positioniert, einem Hilfsantrieb 305, 6, 7 mit einem Rotor 6, der mit einem ersten Getriebeelement 5, dem Wave-Generator drehfest verbunden ist und eine einstellbare Verriegelungseinrichtung 310 zur wahlweisen drehfesten Kopplung zwischen Abtriebswelle 1 und Antriebswelle 4 vorgesehen, dass die Trägeranordnung 8 drehfest gegenüber der Karosserie angeordnet ist, der Rotor des Hilfsantriebes 305, 6, 7 koaxial die Abtriebswelle 4 und/oder Antriebswelle 1 umschliesst, das erste Getriebeelement 5 mit einer Drehzahlübersetzung kleiner 1 die Drehzahl des Rotors 6 auf die Drehzahl der Abtriebswelle 4 überträgt, und der Rotor mit einer konzentrisch die Achsrichtung der Abtriebswelle 4 und Antriebswelle 1 umschliessenden ferromagnetischen oder permanentmagnetischen ersten Kontaktelement 308, drehfest verbunden ist, wobei die drehfeste Kopplung zwischen Abtriebswelle 4 und Antriebswelle 1 durch einen Reibschluss des ersten Kontaktelementes 308 mit einem zweiten Kontaktelement 309, die drehfest mit der Trägeranordnung 8 verbunden ist, erzielt ist und die für die Reibkraft erforderliche Anpresskraft durch eine magnetische Kraft erzeugt ist und wobei zumindest eines der beiden Kontaktelemente 308, 309 in Achsrichtung verschieblich ist.

Eines und/oder beide Kontaktelemente können mit Vorteil alternativ in allen Ausführungsformen Scheiben und /oder Elemente mit Flächenabschnitten sein, die mit korrespondierenden konischen oder gewölbten Oberflächen ausgebildet sind. Dadurch wird die Kontaktfläche bei gleichem Durchmesser erhöht und es kann auch eine Zentrierfunktion erzielt werden.

Die Antriebswelle 1 und Abtriebswelle 4 liegen in einer Achse 303 zueinander ausgerichtet.
In der gezeigten Ausführungsform ist auf dem Rotor 6 des Hilfsantriebes 305, 6, 7 ein Kopplungselement 315 angeordnet, das die erste Kontaktscheibe 308 axial verschiebbar trägt und das Drehmoment überträgt. Der koaxial die Antriebswelle 1 umschliessende Rotor 6 des Hilfsantriebes, wird in einem Wälzlager 314b in der Trägeranordnung 8, die hier als Gehäuse ausgebildet ist, drehbar gelagert. Die Elemente der Verriegelungseinrichtung 310 können in einem separaten Teilgehäuse 317 als Baugruppe gefasst sein, die separat hergestellt wird und mechanisch mit der Trägeranordnung 8 verbunden wird. Diese Verbindung kann dabei einfach über eine Verschraubung in ein hier nicht dargestelltes Innengewinde der Trägeranordnung 8 oder über Verschraubungen 335 hergestellt sein.

Im bevorzugten Fall ist der Hilfsantrieb 305, 6, 7 als Elektromotor ausgelegt, dessen Stator 7 fest mit der Trägeranordnung 8 verbunden ist. Je nach Ausführung des Getriebes umschliesst der Stator 7 die Achse 303 der Antriebswelle 1 und/oder Abtriebswelle 4 koaxial. Der Stator 7 trägt die Statorwindungen 305. Der Rotor des Elektromotors ist mit Permanentmagneten bestückt und wird bei entsprechender Bestromung der Statorwindungen 305 in Drehung versetzt. Der Elektromotor ist entsprechend vollständig in die Drehzahlüberlagerungseinrichtung integriert, wodurch eine sehr kompakte und energieeffiziente Auslegung erreicht ist. Der Motor ist so auszulegen, dass er in beide Drehrichtungen drehend angesteuert werden kann. Durch die Verbindung des Rotors mit einem Getriebeglied des Überlagerungsgetriebes, dessen Drehzahl mit einer Drehzahlübersetzung, die kleiner als 1 ist, auf die Abtriebswelle 1 übertragen wird, kann der Elektromotor mit höherer Drehzahl angesteuert werden. Übersetzungsverhältnisse von mehr als 1:20 oder gar mehr als 1:50 sind dabei besonders vorteilhaft. Das heisst mehr als 20 bzw. 50 Rotorumdrehung entsprechen 1 Umdrehung der Abtriebswelle, wenn die Drehzahlder Antriebswelle den Wert 0 hat.

Die Kontaktelemente 308, 309 sind bevorzugt als kreisrunde Scheiben aus Stahl oder einem anderen ferromagnetischem Werkstoff hergestellt. Es können aber auch unterbrochene bzw. gelochte Scheiben sein, was beispielsweise einer besseren Entlüftung beim Öffnen und Schliessen der beiden Kontaktscheiben dient. Im Ausführungsbeispiel ist die erste Kontaktscheibe 308 über ein Kopplungselement 315 mit dem Rotor 6 der Hilfskrafteinrichtung 305, 6, 7 drehfest aber axial verschieblich verbunden.

Die magnetische Anpresskraft wird im einfachsten Fall durch einen Permanentmagnet 311 erzeugt. Dabei kann der Permanentmagnet 311 als zylindrische Scheibe, deren Achse mit der Achse 8 der Antriebswelle 1 bzw. Abtriebswelle 4 zusammenfällt, ausgebildet sein. Es können aber auch mehrere einzelne Permanentmagnete auf eine zylindrische Scheibe aufgebracht sein. Im weiteren wird jede mögliche Ausführungsform der Einfachheit halber mit dem Permanentmagneten 311 bezeichnet.

Das erste Kontaktelement 308 ist durch das Magnetfeld eines Permanentmagneten 311 an das zweite Kontaktelement 309 herangezogen. Das Teilgehäuse 317 sowie eine entsprechende Ankerausbildung sorgen für den magnetischen Schluss. Die Flächenpressung zwischen den beiden Kontaktelementen 308, 309 dient als Reibschluss. Zur Verbesserung der Reibkraft können eine oder beide der Kontaktelemente 308, 309 mit entsprechenden Reibbelägen beschichtet sein. Eine formschlüssige Oberflächenstruktur der beiden Kontaktelemente 308, 309 wäre zwar naheliegend und denkbar, birgt aber eine Reihe von Nachteilen mit sich. Insbesondere ist dann eine Verriegelung nicht mehr für jeden Relativdrehwinkel zwischen den beiden Kontaktelemente 308, 309 möglich. Auch ist von erhöhtem Verschleiss auszugehen. Insbesondere ist ein Abbremsen einer allfällig noch bestehenden Drehung des Rotors 6 kaum möglich. Dennoch kann eine derartige Lösung im Einzelfall wünschenswert sein.

Im Fall der Verriegelung sind die Kontaktelemente 308, 309 miteinander in Reibkontakt, wodurch der Rotor 6 gegenüber der Trägerstruktur 8 blockiert ist. Der Rotor 6 ist weiter mit einem ersten Getriebeelement 5 bzw. mit dem Wave-Generator verbunden, die damit ebenfalls gegenüber der drehfest bezüglich der Karosserie angeordneten Trägerstruktur 8 blockiert ist. Somit wird das gesamte Drehmoment, das in die Antriebswelle 1 eingeleitet wird, auf die Abtriebswelle 4 übertragen. Entsprechend den wird dabei die Drehzahl der Antriebswelle auf eine Drehzahl an der Abtriebswelle übertragen. Damit ist die Funktion der drehfesten Kopplung zwischen Antriebswelle 1 und Abtriebswelle 4 erzielt. Dieser Fall ist für den Notfall oder auch bei ausgeschaltetem Antriebsmotor des Kraftfahrzeuges wichtig. In diesem Betriebszustand hat der Fahrer die alleinige Kontrolle über die Steuerung der Fahrtrichtung und das Steuerrad ist mit den verschwenkten Rädern mechanisch miteinander gekoppelt. Das ist wichtig, in Fällen mangelnder Energieversorgung des Hilfsantriebes, wie etwa bei Stromausfall, oder auch bei Fehlfunktion der Ansteuerung des Hilfsantriebes. Zur Detektion derartiger Fehlfunktionen können beispielsweise Sensoren 10 in die Drehzahlüberlagerungseinrichtung integriert sein, die eine Überwachung der verschiedenen Drehzahlen bzw. Drehwinkeln an Antriebswelle 1, Abtriebswelle 4 und Rotor 6 ermöglicht.

Im Fall der Entriegelung, bei dem die Drehzahlen bzw. Drehwinkel Antriebswelle 1 und Abtriebswelle 4 zueinander veränderbar sein sollen, werden die Kontaktelemente 308, 309, bevorzugt durch einen kleinen Abstand zueinander, ausser Reibkontakt gebracht. Gleichzeitig wird der Hilfsantrieb mit Energie versorgt, so dass er die Abstützung des von der Antriebswelle 1 eingeleiteten Drehmoments übernimmt. Bedarfsweise wird der Rotor 6 durch den Hilfsantrieb in Drehung versetzt, um die Entsprechende Drehzahl- bzw. Drehwinkelüberlagerung zwischen Antriebswelle 1 und Abtriebswelle 4 zu erreichen.

Es ist besonders vorteilhaft zur Erhöhung der Sicherheit, wenn im Fall der Entriegelung bei Ausfall der Energieversorgung am Hilfsantrieb 305, 6, 7 die Umschaltung in den Fall der Verriegelung, bei dem Abtriebswelle 4 und Antriebswelle 1 drehfest gekoppelt sind, quasi automatisch erfolgt. Zusätzliche Ströme, die die Kopplung bewirken, sollen nicht erforderlich sein. Dieser Vorgang soll zudem für den Fahrer möglichst unmerklich erfolgen.

Dazu soll bevorzugt die Entriegelung durch einen Stromfluss bewirkt werden, während ohne diesen Stromfluss sich das System automatisch verriegelt. In einer Weiterführung der Erfindung wird das dadurch erreicht, dass die magnetische Anpresskraft zwischen dem ersten und zweiten Kontaktelement durch ein elektrisch angesteuertes Gegenmagnetfeld aufhebbar ist. Im einfachsten Fall wird dieses Gegenmagnetfeld durch eine umlaufende Spule 312, die über einen elektrischen Anschluss 313 angesteuert wird, erzeugt. Die Spule 312 ist im Ausführungsbeispiel zwischen dem Permanentmagneten 311, die die magnetische Anpresskraft bewirken und der Kontaktscheibe 309 angeordnet. Ist die Spule 312 entsprechend bestromt, schliesst sich der magnetische Kreis zwischen dem Permanentmagneten 311, so dass auf die erste Kontaktscheibe 308 keine oder nur eine sehr geringe Anziehungskraft in Richtung der zweiten Kontaktscheibe 309 wirkt. Damit sinkt die Reibkraft zwischen den beiden Kontaktscheiben, die im Ausführungsbeispiel das Kontaktelement darstellt, so dass die Verriegelungseinrichtung 310 entriegelt ist. Bei Ausfall der Stromversorgung der Spule 312 bricht das Gegenmagnetfeld unmittelbar zusammen, so dass die Magnetkraft des Permanentmagneten 311 direkt auf die Kontaktscheibe 308 wirkt und diese an die Kontaktscheibe 309 heranzieht.

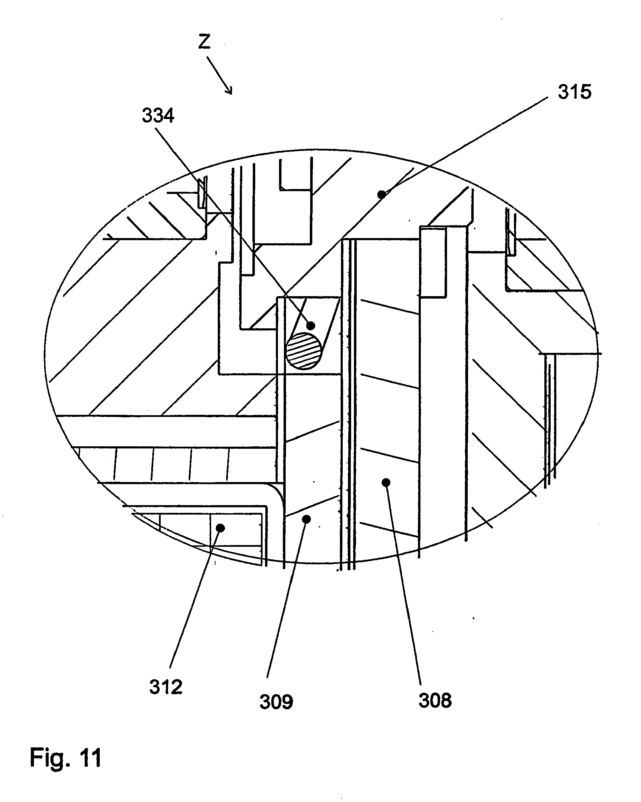

In einer Weiterführung soll der Energieaufwand zum Halten des entriegelten Zustands der Verriegelungseinrichtung 310 gesenkt wird. Dazu umfasst die Verriegelungseinrichtung 310 eine Feder 334 umfasst, deren Kraft entgegen der magnetischen Anpresskraft wirkt, wie auch in Figur 11 dargestellt. Im Ausführungsbeispiel wird die axial verschiebliche Kontaktscheibe 308 mittels einer Feder 334 vom Permanentmagneten 311 weggedrückt. Mit steigendem Abstand der Kontaktscheibe vom Feld des Permanentmagneten 311 sinkt die Anziehungskraft, so dass das Gegenmagnetfeld nur noch schwächer zu sein braucht, um dessen Wirkung aufzuheben.
Die Federkraft muss jedoch zur Verriegelung der Verriegelungseinrichtung 310 durch die magnetische Kraft des Permanentmagneten 311 überwunden werden. Dazu wird in einer Weiterführung der Erfindung die Federkraft definiert ausgelegt. Im bevorzugten Fall ist die Federkraft so bemessen, dass die auf die erste axial bewegliche Kontaktscheibe 308 von der anderen Kontaktscheibe 309 weg gerichtet wirkende Kraft im von der ersten Kontaktscheibe abgehobenen Zustand im Bereich von etwas grösser als Null bis 10% des Betrages der magnetischen Kraft des Magnetfeldes, das die Anpresskraft erzeugt, liegt. Dadurch ist zum Erhalt des entriegelten Zustandes der Verriegelungseinrichtung 310 nur ein sehr geringer Leistungsbedarf für das Gegenmagnetfeld vorhanden. Gleichzeitig ist das sichere Schliessen der Verriegelungseinrichtung gewährleistet. Sobald sich die Kontaktscheiben 308, 309 aufeinander zu bewegen steigt die magnetische Kraft auf die bewegliche Kontaktscheibe 308, so dass die benötigte hohe Reibkraft erzeugt wird. Mit der Dimensionierung der Feder wird gleichzeitig das Prellen beim Zusammenschlagen der beiden Kontaktscheiben vermindert. Der kurzzeitig geringfügig höhere Leistungsbedarf zum Entriegeln der Verriegelungseinrichtung 310 wird durch die Einsparung während der gesamten Dauer des Haltens im entriegelten Zustand mehr als kompensiert.

Die Verriegelungseinrichtung 310 kann sehr gut und kompakt in die Drehzahlüberlagerungseinrichtung integriert werden. Dazu wird bevorzugt der Rotor 6 einerseits direkt in der Trägeranordnung 8 drehbar gelagert 314b und die Antriebswelle 1 in dem fest mit der Trägeranordnung verbundenen Teil der Verriegelungseinrichtung 310, das die zweite Kontaktscheibe umfasst, drehbar gelagert 20. Besonders vorteilhaft ist das andere Ende der Antriebswelle 1 in direkt in der Abtriebswelle 4 gelagert.

Mit Hilfe der nach den oben genannten Merkmalen aufgebauten Einrichtung ist eine Drehzahlüberlagerungseinrichtung mit einer Sicherheitsredundanz für die Lenkung gegen Ausfall der Bordnetzspannung oder andere Störungen gegeben, die sehr schnell und sicher eine mechanische Kopplung zwischen dem Steuerrad und den gelenkten Rädern herstellt. Im Falle eines Ausfalls der Energieversorgung des Hilfsantriebes 305, 6, 7 oder einer anderen Störung der Funktionen des Fahrzeuges wird der Stromfluss zum Betreiben des Gegenmagnetfeldes zum Aufheben der magnetischen Anpresskraft unterbrochen, so dass das erste Kontaktelement 308 mit dem zweiten Kontaktelement 309 mit der magnetisch erzeugten Anpresskraft in reibschlüssigen Kontakt stehen.

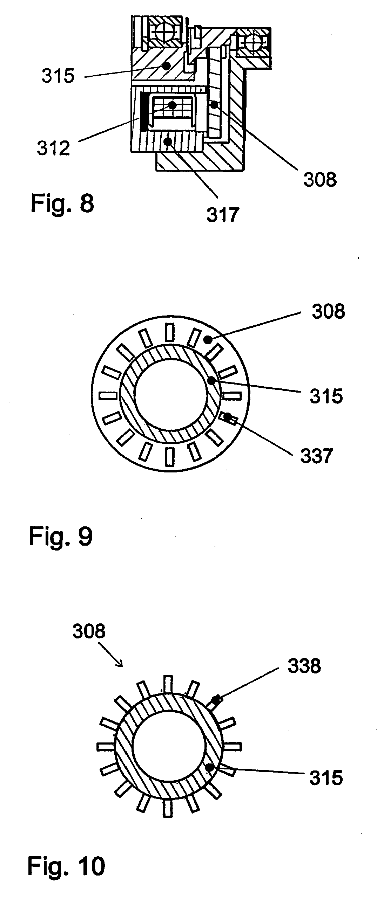

In der Figur 8 ist eine alternative Ausführung für die Sicherheitskupplung dargestellt, bei der das erste Kontaktelement, die Kontaktscheibe 308 direkt mit dem als Joch ausgeführten Teilgehäuse 317 in Kontakt gebracht wird. Das zweite Kontaktelement ist hier als Bestandteil des Teilgehäuses 317 anzusehen.

Die Kontaktscheibe 308 kann in allen Ausführungsformen als zylindrische Scheibe ausgelegt sein. Zur besseren Entlüftung beim Schliessen der beiden Kontaktflächen ist es jedoch von Vorteil, die Kontaktscheibe 308 mit entsprechenden Aussparungen 337 auszulegen (vgl. Figur 9). Alternativ können auch eine Anzahl von Kontaktelementen 338 (vgl. Figur 10) direkt mit dem Kopplungselement 315 verbunden sein. Die Form der Aussparungen 337 bzw. Kontaktelemente 338 der Kontaktscheibe 308 sind den jeweiligen konstruktiven Gegebenheiten anzupassen. Wichtig ist, dass eine genügende magnetische Anziehungskraft zur zweiten Kontaktscheiben 309 bzw. direkt zum Teilgehäuse 317, das an seiner zur Kontaktscheibe 308 hin gerichteten Oberfläche -selbst einen entsprechenden Reibbelag aufweisen kann, erreicht ist.

Auch wenn in allen Ausführungsformen Wälzlager gezeigt sind, ist es denkbar und möglich, Gleitlager einzusetzen. Während im Allgemeinen mit Wälzlagern geringere Reibwerte erzielt werden, sind Gleitlager kostengünstiger und benötigen weniger Bauraum. Die Entscheidung wird je nach den Erfordernissen an Bauraum und Energieeinsatz für den Hilfsantrieb getroffen.

Die so vorgestellte Drehzahlüberlagerungseinrichtung wird in Fahrzeuglenksystemen in der Weise betrieben, dass im Falle eines Ausfalls der Energieversorgung des Hilfsantriebes oder einer anderen Störung der Funktionen des Fahrzeuges der Stromfluss zum Betreiben des Gegenmagnetfeldes zum Aufheben der magnetischen Anpresskraft unterbrochen wird, so dass die erste Kontaktscheibe 308 mit der zweiten Kontaktscheibe 309 mit der magnetisch erzeugten Anpresskraft in reibschlüssigen Kontakt stehen. dadurch wird unmittelbar eine drehfeste Kopplung zwischen der Antriebswelle 1 und der Abtriebswelle 4 erzielt. Es ist in diesem Falle wünschenswert, die Kopplung innerhalb möglichst kurzer Zeit und für den Fahrer möglichst unmerklich herzustellen. Als Fehlerfall ist neben dem Energieausfall der Energieversorgung des Hilfsantriebes oder im Fahrzeug auch ein Sensorausfall, ein Problem mit der Ansteuerung oder ein Softwarefehler oder sonstiger Fehler denkbar. So kann beispielsweise durch einen einfachen Kabelbruch, der Messwert der Geschwindigkeit des Fahrzeuges nicht mehr korrekt an die Steuerung der Überlagerungsregelung übertragen werden. Damit kann die Steuerung nicht mehr entscheiden, mit welcher Drehzahlüberlagerung die Einrichtung betrieben werden soll. In einem derartigen Fall, der leicht erkennbar ist, steht genügend Energie zur Verfügung, die drehfeste Kopplung zwischen Abtriebswelle 4 und Antriebswelle 1 aktiv zur erreichen.

In einer bevorzugten Weiterführung der Erfindung wird die Spule für das Gegenmagnetfeld, mit dem das Magnetfeld des Permanentmagneten 311, das die Verriegelungseinrichtung 310 zur wahlweisen drehfesten Kopplung zwischen Abtriebswelle 4 und Antriebswelle 1 bewirkt, aufgehoben wird, zumindest zeitweise so geschaltet, dass die magnetische Anpresskraft zwischen den beiden Kontaktscheiben 308, 309 erhöht ist. Dadurch wird ein beschleunigtes Schliessen der Verriegelungseinrichtung bewirkt. Nach dem die drehfeste Kopplung der Abtriebswelle 4 und der Antriebswelle 1 erreicht ist, kann die Bestromung der Spule 312 für das Gegenmagnetfeld abgeschaltet werden.

## Patentansprüche

1. Drehzahlüberlagerungseinrichtung für ein Fahrzeuglenksystem mit:
- einer Abtriebswelle (4), die zur Antriebswelle (1) in deren Achsrichtung ausgerichtet ist,
- einer Trägeranordnung (8), welche die Antriebswelle (1) und die Abtriebswelle (4) mindestens teilweise gelagert, drehbar positioniert,
- einem Hilfsantrieb (6, 7) mit einem Rotor (6), der drehfest mit einem Wave-Generator (5), wie einer ovalen Scheibe, verbunden ist, auf dessen Umfang direkt oder indirekt ein aussenverzahnter flexibler Ring (2) gelagert ist, wobei dessen Aussenverzahnung in ein Innenzahnrad (3), zumindest an zwei gegenüberliegenden Umfangspunkten, eingreift,
wobei die Trägeranordnung (8) karosseriefest angeordnet ist, die Abtriebswelle (4) mit dem Innenzahnrad (3) drehfest verbunden ist, die Antriebswelle (1) mit dem aussenverzahnten flexiblen Ring (2) drehfest verbunden ist und dass die Antriebswelle (1) und die Abtriebswelle (4) unabhängig voneinander frei drehbar gelagert ist, und dass die Einrichtung eine Verriegelungsvorrichtung (9, 310) aufweist, die im Störungsfall den Rotor(6) mit dem Stator (7) und / oder der Trägeranordnung (8) drehfest verriegelt, **dadurch gekennzeichnet, dass** der Rotor (6) mit einer konzentrisch die Achsrichtung der Abtriebswelle (4) und Antriebswelle (1) umschliessenden ferromagnetischen oder permanentmagnetischen ersten Kontaktelement (308) drehfest verbunden ist, wobei die wahlweise drehfeste Kopplung zwischen Abtriebswelle (4) und Antriebswelle (1) durch einen Reibschluss des ersten Kontaktelementes (308) mit einem zweiten Kontaktelement (309), das drehfest mit der Trägeranordnung (8) verbunden ist, erzielbar ist und die für die Reibkraft erforderliche Anpresskraft durch eine magnetische Kraft erzeugt ist und wobei zumindest eines der beiden Kontaktelemente (308, 309) in Achsrichtung verschieblich ist.

2. Drehzahlüberlagerungseinrichtung für ein Fahrzeuglenksystem mit:
- einer Abtriebswelle (4), die zur Antriebswelle (1) in deren Achsrichtung ausgerichtet ist,
- einer Trägeranordnung (8), welche die Antriebswelle (1) und die Abtriebswelle (4) mindestens teilweise gelagert, drehbar positioniert,
- einem Hilfsantrieb (6, 7) mit einem Rotor (6), der drehfest mit einem Wave-Generator (5) wie einer ovalen Scheibe verbunden ist, auf dessen Umfang direkt oder indirekt ein aussenverzahnter flexibler Ring (2) gelagert ist, wobei dessen Aussenverzahnung in ein Innenzahnrad (3), zumindest an zwei gegenüberliegenden Umfangspunkten, eingreift,
wobei die Trägeranordnung (8) karosseriefest angeordnet ist, die Antriebswelle (1) mit dem Innenzahnrad (3) drehfest verbunden ist, die Abtriebswelle (4) mit dem aussenverzahnten flexiblen Ring (2) drehfest verbunden ist und dass die Antriebswelle (1) und die Abtriebswelle (4) unabhängig voneinander frei drehbar gelagert ist, und dass die Einrichtung eine Verriegelungsvorrichtung (9, 310) aufweist, die im Störungsfall den Rotor(6) mit dem Stator (7) und / oder der Trägeranordnung (8) drehfest verriegelt, **dadurch gekennzeichnet, dass** der Rotor (6) mit einer konzentrisch die Achsrichtung der Abtriebswelle (4) und Antriebswelle (1) umschliessenden ferromagnetischen oder permanentmagnetischen ersten Kontaktelement (308) drehfest verbunden ist, wobei die wahlweise drehfeste Kopplung zwischen Abtriebswelle (4) und Antriebswelle (1) durch einen Reibschluss des ersten Kontaktelementes (308) mit einem zweiten Kontaktelement (309), das drehfest mit der Trägeranordnung (8) verbunden ist, erzielbar ist und die für die Reibkraft erforderliche Anpresskraft durch eine magnetische Kraft erzeugt ist und wobei zumindest eines der beiden Kontaktelemente (308, 309) in Achsrichtung verschieblich ist.

3. Drehzahlüberlagerungseinrichtung nach Anspruch 1 oder 2, **dadurch gekennzeichnet, dass** mindestens eines der Kontaktelemente (308, 309) scheibenförmig und/oder konusförmig ausgebildet ist.

4. Drehzahlüberlagerungseinrichtung nach einem der vorhergehenden Ansprüche 1 bis 3, **dadurch gekennzeichnet, dass** der flexible Ring (2) topfförmig ausgebildet ist und seine Bodenfläche (11) mit der Antriebswelle (1) bzw. der Abtriebswelle (4) drehfest verbunden ist.

5. Drehzahlüberlagerungseinrichtung nach einem der vorhergehenden Ansprüche 1 bis 4, **dadurch gekennzeichnet, dass** eine einstellbare Verriegelungseinrichtung (9) zur wahlweisen Blockierung der Verdrehung des Rotors (6) in Bezug auf die Trägeranordnung (8) vorgesehen ist.

6. Drehzahlüberlagerungseinrichtung nach einem der vorhergehenden Ansprüche 1 bis 5, **dadurch gekennzeichnet, dass** die Trägeranordnung (8) als Gehäuse ausgebildet ist.

7. Drehzahlüberlagerungseinrichtung nach einem der vorhergehenden Ansprüche 1 bis 6, **dadurch gekennzeichnet, dass** der Hilfsantrieb (6, 7) als Elektromotor ausgebildet ist, vorzugsweise als elektronisch kommutierter Motor.

8. Drehzahlüberlagerungseinrichtung nach einem der vorhergehenden Ansprüche 1 bis 7, **dadurch gekennzeichnet, dass** der aussenverzahnte flexible Ring (2) und das Innenzahnrad (3) des Harmonic Drive nicht drehfest gegenüber der Trägeranordnung (8) bzw. dem Fahrzeugchassis angeordnet ist.

9. Drehzahlüberlagerungseinrichtung nach einem der vorhergehenden Ansprüche 1 bis 8, **dadurch gekennzeichnet, dass** ein Winkelsensor (10) vorgesehen ist zur Erfassung der Drehzahlüberlagerung und dieser mindestens eines der Signale erfasst am Rotor (6), an der Antriebswelle (1) oder an der Abtriebswelle (4) und dass dieser mit einem Steuergerät (128) verbunden ist zur Ansteuerung des Hilfsantriebes (6, 7).

10. Drehzahlüberlagerungseinrichtung nach einem der vorhergehenden Ansprüche 1 bis 9, **dadurch gekennzeichnet, dass** die Anordnung neben der Drehzahlüberlagerung zwischen der Antriebswelle (1) und der Abtriebswelle (4) im wesentlichen keine Lenkungshilfskraft auf die Abtriebswelle (4) einkoppelt.

11. Drehzahlüberlagerungseinrichtung nach einem der vorhergehenden Ansprüche 1 bis 10, **dadurch gekennzeichnet, dass** Rotor (6) und Stator (7) des Hilfsantriebes koaxial zur Antriebswelle (1) bzw. Abtriebswelle (4) ausgerichtet angeordnet sind.

12. Drehzahlüberlagerungseinrichtung nach einem der vorhergehenden Ansprüche 1 bis 11, **dadurch gekennzeichnet, dass** abtriebswellenseitig zusätzlich eine Lenkkrafthilfeanordnung vorgesehen ist.

## Claims

1. Device for imposing rotational speeds for a vehicle steering system with:
- an output shaft (4) which is aligned to the drive shaft (1) in its axial direction,
- a support device (8) which rotationally positions the drive shaft (1) and the output shaft (4) at least partly mounted on bearings, and
- an auxiliary drive (6, 7) with a rotor (6) that is connected rotationally stationary with a wave generator (5) such as an oval disc, on the periphery of which is mounted directly or indirectly a flexible ring (2) with external toothing, whereby this external toothing engages in an internal toothed gear (3) at least at two opposing peripheral points,
wherein the support device (8) is arranged stationary to the body, the output shaft (4) is connected rotationally stationary with the internal toothed gear (3), the drive shaft (1) is connected rotationally stationary with the externally toothed flexible ring (2) and the drive shaft (1) and the output shaft (4) are mounted freely rotatable independently of each other, and the device has a locking device (9, 310) which in event of fault locks the rotor (6) with the stator (7) and/or the support device (8) in a rotationally stationary manner, **characterised in that** the rotor (6) is connected rotationally stationary with a ferromagnetic or permanent magnet first contact element (308) surrounding concentrically the axial direction of the output shaft (4) and the drive shaft (1), wherein the optional rotationally stationary coupling between the output shaft (4) and the drive shaft (1) can be achieved by a friction connection of the first contact element (308) with a second contact element (309) that is connected rotationally stationary with the support device (8), and the contact force necessary for the friction force is generated by a magnetic force, and wherein at least one of the two contact elements (308, 309) is displaceable in the axial direction.

2. Device for imposing rotational speeds for a vehicle steering system with:
- an output shaft (4) which is aligned to the drive shaft (1) in its axial direction,
- a support device (8) which rotationally positions the drive shaft (1) and the output shaft (4) at least partly mounted on bearings, and
- an auxiliary drive (6, 7) with a rotor (6) that is connected rotationally stationary with a wave generator (5) such as an oval disc, on the periphery of which is mounted directly or indirectly a flexible ring (2) with external toothing, whereby this external toothing engages in an internal toothed gear (3) at least at two opposing peripheral points,
wherein the support device (8) is arranged stationary to the body, the output shaft (4) is connected rotationally stationary with the internal toothed gear (3), the output shaft (4) is connected rotationally stationary with the externally toothed flexible ring (2) and the drive shaft (1) and the output shaft (4) are mounted freely rotatable independently of each other, and the device has a locking device (9, 310) which in event of fault locks the rotor (6) with the stator (7) and/or the support device (8) in a rotationally stationary manner, **characterised in that** the rotor (6) is connected rotationally stationary with a ferromagnetic or permanent magnet first contact element (308) surrounding concentrically the axial direction of the output shaft (4) and the drive shaft (1), wherein the optional rotationally stationary coupling between the output shaft (4) and the drive shaft (1) can be achieved by a friction connection of the first contact element (308) with a second contact element (309) that is connected rotationally stationary with the support device (8), and the contact force necessary for the friction force is generated by a magnetic force, and wherein at least one of the two contact elements (308, 309) is displaceable in the axial direction.

3. Device for imposing rotational speeds according to claim 1 or 2, **characterised in that** at least one of the contact elements (308, 309) is formed as a plate and/or cone.

4. Device for imposing rotational speeds according to any of the preceding claims 1 to 3, **characterised in that** the flexible ring (2) is formed as a pot and its base surface (11) is connected rotationally stationary with the drive shaft (1) or the output shaft (4).

5. Device for imposing rotational speeds according to any of the claims 1 to 4, **characterised in that** an adjustable locking device (9) is provided for optional blocking of the twist of the rotor (6) in relation to the support device (8).

6. Device for imposing rotational speeds according to any of the preceding claims 1 to 5, **characterised in that** the support device (8) is formed as a housing.

7. Device for imposing rotational speeds according to any of the preceding claims 1 to 6, **characterised in that** the auxiliary drive (6, 7) is formed as an electric motor, preferably as an electronically commutated motor.

8. Device for imposing rotational speeds according to any of the preceding claims 1 to 7, **characterised in that** the externally toothed flexible ring (2) and the internal toothed gear (3) of the harmonic drive are not arranged rotationally stationary in relation to the support device (8) or the vehicle chassis.

9. Device for imposing rotational speeds according to any of the preceding claims 1 to 8, **characterised in that** an angle sensor (10) is provided to detect the rotational speed imposition and this detects at least one of the signals at the rotor (6), at the drive shaft (1) or at the output shaft (4) and this is connected with a control unit (128) to control the auxiliary drive (6, 7).

10. Device for imposing rotational speeds according to any of the preceding claims 1 to 9, **characterised in that** the arrangement, apart from the rotational speed imposition between the drive shaft (1) and the output shaft (4), substantially couples no steering assistance force onto the output shaft (4).

11. Device for imposing rotational speeds according to any of the preceding claims 1 to 10, **characterised in that** the rotor (6) and stator (7) of the auxiliary drive are arranged coaxial to the drive shaft (1) or output shaft (4).

12. Device for imposing rotational speeds according to any of the preceding claims 1 to 11, **characterised in that** an additional steering assistance aid device is provided on the output shaft side.

## Revendications

1. Dispositif de superposition de vitesses de rotation, dites simplement vitesses dans les revendications dépendantes ci-dessous, pour système de direction de véhicule, comprenant:
un arbre de sortie (4) orienté dans la direction axiale de l'arbre d'entrée (1),
une structure porteuse (8) où l'arbre d'entrée (1) et l'arbre de sortie (4) sont au moins en partie logés sur paliers, en rotation libre,
un servomoteur (6, 7) comprenant un rotor (6) qui est connecté sans rotation possible à un générateur (5) d'ondes, par exemple un disque ovale, sur la périphérie duquel une bague flexible dentée extérieurement (2) est directement ou indirectement logée sur paliers, cette denture extérieure s'engrenant avec une roue dentée intérieurement (3) au moins en deux points périphériques opposés,
où la structure porteuse (8) est connectée à la carrosserie sans rotation possible, l'arbre de sortie (4) est connecté sans rotation possible à la roue dentée intérieurement (3), l'arbre d'entrée (1) est connecté sans rotation possible à la bague flexible dentée extérieurement (2) et l'arbre d'entrée (1) et l'arbre de sortie (4) sont logés sur paliers en rotation libre indépendamment l'un de l'autre, et où le dispositif comprend un mécanisme de verrouillage (9, 310) qui verrouille sans rotation possible, en cas de défaillance, le rotor (6) avec le stator (7) et/ou la structure porteuse (8), **caractérisé en ce que** le rotor (6) est connecté sans rotation possible avec un premier élément de contact (308) ferromagnétique ou à aimant permanent qui entoure de façon concentrique la direction axiale de l'arbre de sortie (4) et de l'arbre d'entrée (1), où l'arbre de sortie (4) et l'arbre d'entrée (1) peuvent à volonté être accouplés sans rotation possible par une fermeture à friction du premier élément de contact (308) avec un deuxième élément de contact (309) qui est connecté sans rotation possible avec la structure porteuse (8), et la force de pression nécessaire pour la force de friction est générée par une force magnétique, et où au moins l'un des éléments de contact (308, 309) peut coulisser en direction axiale.

2. Dispositif de superposition de vitesses de rotation, dites simplement vitesses dans les revendications dépendantes ci-dessous, pour système de direction de véhicule, comprenant:
un arbre de sortie (4) orienté dans la direction axiale de l'arbre d'entrée (1),
une structure porteuse (8) où l'arbre d'entrée (1) et l'arbre de sortie (4) sont au moins en partie logés sur paliers, en rotation libre,
un servomoteur (6, 7) comprenant un rotor (6) qui est connecté sans rotation possible à un générateur (5) d'ondes, par exemple un disque ovale, sur la périphérie duquel une bague flexible dentée extérieurement (2) est directement ou indirectement logée sur paliers, cette denture extérieure s'engrenant avec une roue dentée intérieurement (3) au moins en deux points périphériques opposés,
où la structure porteuse (8) est connectée à la carrosserie sans rotation possible, l'arbre d'entrée (1) est connecté sans rotation possible à la roue dentée intérieurement (3), l'arbre de sortie (4) est connecté sans rotation possible à la bague flexible dentée extérieurement (2) et l'arbre d'entrée (1) et l'arbre de sortie (4) sont logés sur paliers en rotation libre indépendamment l'un de l'autre, et où le dispositif comprend un mécanisme de verrouillage (9, 310) qui verrouille sans rotation possible, en cas de défaillance, le rotor (6) avec le stator (7) et/ou la structure porteuse (8), **caractérisé en ce que** le rotor (6) est connecté sans rotation possible avec un premier élément de contact (308) ferromagnétique ou à aimant permanent qui entoure de façon concentrique la direction axiale de l'arbre de sortie (4) et de l'arbre d'entrée (1), où l'arbre de sortie (4) et l'arbre d'entrée (1) peuvent à volonté être accouplés sans rotation possible par une fermeture à friction du premier élément de contact (308) avec un deuxième élément de contact (309) qui est connecté sans rotation possible avec la structure porteuse (8), et la force de pression nécessaire pour la force de friction est générée par une force magnétique, et où au moins l'un des éléments de contact (308, 309) peut coulisser en direction axiale.

3. Dispositif de superposition de vitesses selon la revendication 1 ou 2, **caractérisé en ce qu'**au moins l'un des éléments de contact (308, 309) est en forme de disque ou de cône.

4. Dispositif de superposition de vitesses selon la revendication 1, 2 ou 3 **caractérisé en ce que** la bague flexible (2) est en forme de coupelle et sa surface de fond (11) est connectée sans rotation possible à l'arbre d'entrée (1) ou à l'arbre de sortie (4).

5. Dispositif de superposition de vitesses selon l'une quelconque des revendications précédentes, **caractérisé en ce qu'**il comprend un dispositif de verrouillage ajustable (9) pour bloquer à volonté la rotation du rotor (6) par rapport à la structure porteuse (8).

6. Dispositif de superposition de vitesses selon l'une quelconque des revendications précédentes, **caractérisé en ce que** la structure porteuse (8) consiste en un carter.

7. Dispositif de superposition de vitesses selon l'une quelconque des revendications précédentes, **caractérisé en ce que** le servomoteur (6, 7) consiste en un moteur électrique, de préférence à commutation électronique.

8. Dispositif de superposition de vitesses selon l'une quelconque des revendications précédentes, **caractérisé en ce que** la bague flexible dentée extérieurement (2) et la roue dentée intérieurement (3) de la transmission harmonique ne sont pas montées sans rotation possible par rapport à la structure porteuse (8) ou au châssis de véhicule.

9. Dispositif de superposition de vitesses selon l'une quelconque des revendications précédentes, **caractérisé en ce qu'**il comprend un capteur angulaire (10) pour détecter la superposition des vitesses, et que celui-ci capte au moins l'un des signaux sur le rotor (6), l'arbre d'entrée (1) ou l'arbre de sortie (4) et qu'il est connecté à un dispositif de commande (128) qui commande le servomoteur (6, 7).

10. Dispositif de superposition de vitesses selon l'une quelconque des revendications précédentes **caractérisé en ce que** la structure n'accouple essentiellement à l'arbre de sortie (4) aucune force d'assistance de direction autre que la superposition de vitesses entre l'arbre d'entrée (1) et l'arbre de sortie (4).

11. Dispositif de superposition de vitesses selon l'une quelconque des revendications précédentes **caractérisé en ce que** le rotor (6) et le stator (7) de la servocommande sont orientés coaxialement avec l'arbre d'entrée (1) et l'arbre de sortie (4).

12. Dispositif de superposition de vitesses selon l'une quelconque des revendications précédentes, **caractérisé en ce qu'**il inclut en outre une structure de direction assistée sur le côté arbre de sortie.
